(19)

**Europäisches Patentamt**

**European Patent Office**

**Office européen des brevets**

(11) **EP 4 412 103 A2**

(12) **EUROPEAN PATENT APPLICATION**

(43) Date of publication:
**07.08.2024 Bulletin 2024/32**

(21) Application number: **24152935.3**

(22) Date of filing: **19.01.2024**

(51) International Patent Classification (IPC):
***H04B 7/06*** *(2006.01)*      ***H04L 5/00*** *(2006.01)*

(52) Cooperative Patent Classification (CPC):
**H04B 7/0626; H04B 7/0632; H04B 7/0639; H04L 5/0048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.02.2023 FI 20235092**

(71) Applicant: **Nokia Solutions and Networks Oy 02610 Espoo (FI)**

(72) Inventor: **ZIRWAS, Wolfgang 81249 Munich (DE)**

(74) Representative: **Nokia EPO representatives Nokia Technologies Oy Karakaari 7 02610 Espoo (FI)**

(54) **MODIFIED TYPE II CONTROL STATE INFORMATION REPORTING**

(57) Modified type II control state information (CSI) reporting for achieving explicit CSI knowledge is provided. A method may be performed by providing, to a user equipment, a plurality of channel state information reference signals over a single beam and receiving channel state information from the user equipment. Explicit channel state information may be determined from a channel transfer function for some or all frequency subbands based on the received channel state information.

EP 4 412 103 A2

**Description**

TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to modified Type II control state information (CSI) reporting.

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

SUMMARY:

Various exemplary embodiments may provide a method including providing, to a user equipment, a plurality of channel state information reference signals over a single beam for a plurality of frequency subbands, wherein a frequency subband comprises a plurality of physical resource blocks, each physical resource block comprising a plurality of resource elements;
and receiving channel state information from the user equipment. The method may further include determining explicit channel state information from a channel transfer function for some or all frequency subbands based on the received channel state information.

Certain exemplary embodiments may provide a method including receiving, from a network device, a plurality of channel state information reference signals over a single beam and reporting channel state information to a network device. The method may further include determining and reporting, to the network device, amplitude and phase on subband borders, which is reported separately from the channel state information.

Various exemplary embodiments may provide a method including providing, to a network device, a request for information on a capability of the network device related to explicit channel state information. The method also may include selecting a procedure according to feedback from the network device in response to the request and configuring the network entity for the selected procedure.

Some exemplary embodiments may provide an apparatus including at least one processor and at least one memory storing instructions. The instructions, when executed by the at least one processor, may cause the apparatus at least to provide, to a user equipment, a plurality of channel state information reference signals over a single beam and receive channel state information from the user equipment. The apparatus may be further caused to determine explicit channel state information from a channel transfer function for some or all frequency subbands based on the received channel state information.

Certain exemplary embodiments may provide an apparatus including at least one processor and at least one memory storing instructions. The instructions, when executed by the at least one processor, may cause the apparatus at least to receive a plurality of channel state information reference signals over a single beam. The apparatus may further be caused to report channel state information to a network device, and determine and report, to the network device, amplitude and phase on subband borders, which is reported separately from the channel state information.

Various exemplary embodiments may provide an apparatus including at least one processor and at least one memory storing instructions. The instructions, when executed by the at least one processor, may cause the apparatus at least to provide, to a network device, a request for information on a capability of the network device related to explicit channel state information. The apparatus may further be caused to select a procedure according to feedback from the network device in response to the request and configure the network entity for the selected procedure.

BRIEF DESCRIPTION OF THE DRAWINGS:

For proper understanding of example embodiments, reference should be made to the accompanying drawings, as follows:

FIG. 1 illustrates an example of Type II channel state information (CSI) processing according to various exemplary embodiments;

FIG. 2 illustrates an example of a procedure of transmitting logical ports orthogonal CSI reference signals (RSs) over the same single beam, according to various exemplary embodiments;

FIG. 3 illustrates an example of a procedure for orthogonal CSI RSs, according to certain exemplary embodiments;

FIG. 4 illustrates an example of a procedure for normalized explicit CSI to be received for frequency subbands, according to certain exemplary embodiments;

FIG. 5 illustrates an example of relative explicit CSI for one single frequency subband, according to certain exemplary embodiments;

FIG. 6 illustrates an example of allocation of non-zero power CSI RS, according to certain exemplary embodiments;

FIG. 7 illustrates an example of port selection beam transmission, according to various exemplary embodiments;

FIG. 8 illustrates an example of an unwrapped explicit CSI and piecewise angle as reconstructed from the CSI reports, according to various exemplary embodiments;

FIG. 9 illustrates an example of estimation versus the ideal known angle evolution, according to certain exemplary embodiments;

FIG. 10 illustrates an example of non-zero power CSI RS transmitted per physical resource block, according to some exemplary embodiments;

FIG. 11 illustrates another example of non-zero power CSI RS transmitted per physical resource block, according to some exemplary embodiments;

FIG. 12 illustrates a message signal flow, according to certain exemplary embodiments;

FIG. 13 illustrates an example of a flow diagram of a method, according to various exemplary embodiments;

FIG. 14 illustrates an example of a flow diagram of another method, according to some exemplary embodiments;

FIG. 15 illustrates an example of a flow diagram of a further method, according to certain exemplary embodiments; and

FIG. 16 a set of apparatuses according to various exemplary embodiments.

DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for modified Type II control state information (CSI) reporting for achieving explicit CSI knowledge. Although the devices discussed below and shown in the figures refer to Next Generation NodeB (gNB) devices and UE devices, this disclosure is not limited to gNBs and UEs.

Multiple input multiple output (MIMO) networks may be implemented by a radio access network (RAN) and may be formed of a plurality of antenna arrays at a base station that serve users via associated user equipment using the same time-frequency resources. MIMO networks use a multipath effect to obtain diversity and multiplexing gain, which increase the link rate and reduce the bit error rate. The MIMO network may be formed by channels between the antennas of the base station and the multiple user equipment communicating with the antennas of the base station. To establish communication, the channel may be estimated using signals, which are also referred to as pilots, that use known information and a channel coefficient to form a channel.

Beamforming in the MIMO network may rely on accurate CSI. In 5G technology, two strategies may be considered for CSI reporting - Type I CSI and Type II CSI feedback. Both CSI reporting procedures may include a strong compression of the CSI estimated at a user equipment (UE) side to reduce the over-the-air (OTA) overhead. The compression of CSI may reduce the precision of the CSI, which impacts the performance of MIMO precoding. Certain relevant information of the radio channel may be lost, such as, for example, the reported precoding matrix indicators (PMIs) may not provide so-called explicit CSI so that the relevant gNB cannot reconstruct a complex channel transfer function, or channel impulse response, of the radio channel.

Several applications may benefit from explicit CSI, such as, for example, gNB sided channel prediction, accurate positioning methods, communication and sensing, or learning of geometrical structures of the building vector data maps (BVDM) of a digital twin. Explicit CSI may allow to infer multipath component parameters like delay, amplitudes, and phases by procedures such as profiling with high accuracy.

For frequency division duplex (FDD) systems, a procedure for achieving CSI information at the gNB may be transmitting pilot signals on the downlink (DL) and reporting of the estimated CSI as Type I CSI or Type II CSI feedback over the physical uplink control channel (PUCCH). Type II CSI feedback may be optimized for achieving high cosine similarity from the reported PMI relative to the radio channel eigenvectors. The Type II CSI reporting may include, for example, a covariance estimation and/or an eigenvalue decomposition per frequency subband to identify the strongest eigenvectors. These operations may result in concealing, or otherwise preventing the determination of, the frequency dependent amplitudes and phases of the real-world radio channels of the relevant beams. Based on the reported PMI, the gNB may not be able to reconstruct the complex channel transfer functions.

Conventional Type II CSI reporting may not provide the explicit CSI nor even provide a rough estimate of the explicit CSI. For single shot PMI based MU-MIMO precoding, the explicit CSI may not be needed as the PMI based MU-MIMO precoding attempts to approximate optimal eigen beamformers of the radio channel by the best fitting codebook entry. Further, advanced channel prediction methods infer the relevant multipath components of the radio channel and extrapolate for a predicted future smooth projection over time.

Another implementation of explicit CSI may be accurate positioning as discussed for 5G Advanced as well as for 6G, where the explicit CSI aids in determining the relevant multipath component (MPC) parameters including the radio channel. Accurate knowledge of the relevant multipath component parameters, such as delay, amplitude, and phase, may allow to achieve even sub wavelength position accuracies in the centimeter range. With powerful MPC parameter estimators, non-line-of-sight (NLOS) scenarios may be supported, and positioning may be achieved within a single gNB.

A further implementation of accurate inference of multipath component parameters based on the knowledge of explicit CSI may determine geometrical dimensions of a building vector data map (BVDM) of a digital twin of the gNB environment of the gNB. In this implementation, moving UEs may report explicit CSI and the gNBs infer the multipath component parameters based on the CSI reports of a multitude of UEs from a multitude of UE positions. This may a specific minimization of drive test (MDT) application. This implantation may infer the effects of moving objects within a digital twin.

Type II CSI may report the PMI as $W1$, $W2$ and potentially $Wf$ matrices, where a related code entry of the codebook reconstructs a strongest eigen beam of the radio channel. The PMI may be obtained, for example, for $R = 13$ frequency subbands, where each subband has a size of four physical resource blocks (PRB). For port selection codebooks, the UE may calculate the strongest eigenvectors for a set of $L \leq P/2$ beams, where the $P/2$ beams may be predefined by the gNB. The factor of two for $P/2$ is related to the two polarizations per beam.

PMI may report relative phases per beam and relative amplitudes between L beams over the frequency domain. An eigen vector may always be unitary so that the PMI of the frequency selective amplitude and phase values for the strongest beam may be lost. The loss may be due to the standardized calculation steps defined for the Type II CSI reporting.

In 3GPP NR and LTE, a sufficient CSI reporting mode, which provides explicit CSI, does not exist because, in MIMO and massive MIMO, the feedback overhead may be desired to be minimized, which led to the codebook-based approach. This may result in related PMIs reported individually per one PRB, or frequency subband and semi or fully independent from the adjacent frequency subbands. In 3GPP NR, one priority may have been on UE based channel prediction, where the UE determines the PMI for a future time instance in which the UE has access to the explicit CSI needed for proper channel prediction. Generally, this UE side channel prediction may not have previously been possible at the gNB side based on Type II CSI reports as the PMI values do not evolve smoothly over time, but instead fluctuate in an unpredictable manner.

There is a need in the conventional art for to get explicit CSI from the UE to the gNB side and for CSI to be determined at the gNB side. gNB sided CSI prediction may have benefits as the gNB has higher processing power and some procedures with extremely low reporting overhead rely on gNB sided CSI prediction, or even CSI prediction at the gNB and the UE side (collaboration level z corresponding to latest 3GPP NR ML agreements). There is also a need to improve upon a situation in which eigenvalue decomposition (EVD) normalizes the reporting vectors to "1" so that the amplitude values of the explicit CSI of a channel H(f) is lost. Further, there is also a need to improve upon a situation in which expectation operation averages the CSI RSs over the frequency subbands, such as over four PRBs so that the f-selectivity within each frequency subband is lost. There is also a need to improve upon a situation in which relative phase information between subbands of the explicit CSI is lost, such that it is not possible to get the explicit CSI over the full RF bandwidth, which is needed for the inference of MPC parameters. In addition, there is a need to improve upon a situation in which no clear mapping exists between an explicit channel transfer function (CTF) and the elements of the eigenvectors per frequency subband, such that a swapping between elements of Eigenvectors of adjacent frequency subbands is observed.

Various exemplary embodiments may advantageously address the above-described considerations by advantageously providing procedures to identify an ambiguity subspace and down select the best fitting multipath component parameter set from the ambiguity subspace by a combined search over the UE and the gNB. This may also require exchange of explicit CSI, which is not supported in conventional NR.

Various exemplary embodiments may provide procedures to modify gNB processing including the setup of the CSI reference symbol (RS) signals per antenna port and allocation of antenna ports to the transmit beams so that the Type II CSI report from the UE provides inherently the explicit CSI, at least piecewise for each frequency subband. The gNB processing may be fully transparent to the UE, which follows the standardized processing steps.

Certain exemplary embodiments may be implemented by the gNB. The gNB may configure, for example, a port selection codebook with, e.g., $L = 4$ beams or $P = 8$ ports. Some exemplary embodiments may generate and transmit only $L = 1$, instead of $L = 4$ beams. This means that three of the $L = 4$ configured beams may be deactivated by the gNB and set to zero. The gNB may then allocate four CSI RSs or four antenna ports (AP) to the single beam $l = 1$. This means that the single beam may be estimated by four orthogonal CSI RSs, where conventionally these four orthogonal CSI RSs would have been allocated to the configured four beams. The CSI RSs may be allocated over the RF bandwidth and over some (a subset of) or all frequency subbands in order to cover the channel transfer function of the beam $l = 1$. For example the CSI RSs may be allocated over the full RF bandwidth and over all frequency subbands in order to cover the entire channel transfer function of the beam $l = 1$.

In other exemplary embodiments, the gNB may also modify the allocation of CSI RSs to CSI RS resource elements. Each frequency subband may be formed of four PRBs and conventionally each PRB carries the same CSI RSs (=same AP) at the same resource elements (RE) of each PRB. According to the exemplary embodiments described herein, each one of the four non-zero power CSI RSs may be allocated to only one single PRB per subband, while the other three PRBs zero power CSI RS (= no CSI RSs) are transmitted. The CSI RSs may be allocated such that each PRB has one different non-zero power CSI RS.

According to various exemplary embodiments, the UE may perform the expectation operation over each frequency subband over the resource elements of one AP, only one non-zero power CSI RS per AP on one single out of the four PRBs may be provided. Thus, the expectation operation may directly estimate the complex receive signal of the single RE of this single PRB (or single subcarrier) instead of the conventionally estimated averaged value over the four PRBs.

According to some exemplary embodiments, for each PRB (subcarrier or resource element) of the frequency subband, the gNB may allocate a different AP with a different CSI RS so that the UE estimates the complex channel transfer function per frequency subband on, such as four different regularly spaced subcarriers. Combining the channel estimates of the four APs may result in the piecewise channel transfer function per frequency subband of four PRBs. Further, as the gNB transmits the CSI RSs for one single active beam (as the $l > 1$ other beams have been switched off at the gNB), the strongest eigen beam may be able to maintain the relative power and relative phases as estimated at the four PRBs, e.g., subcarriers. By reporting the strongest eigenvectors of the covariance matrices for all $R = 13$ frequency subbands, the gNB may obtain, for each frequency subband, the relative evolution of the channel transfer function.

Some exemplary embodiments may provide the ability for the gNB to obtain piecewise evolution of the channel transfer function, such as $R = 13$ pieces of chunks with the relative explicit CSI over the four resource elements/subcarriers per frequency subband. The gNB may then combine the $R = 13$ pieces of explicit CSI evolutions to one combined channel transfer function. For that purpose, the gNB may infer the most likely evolution of the angle and the amplitudes over the borders of the piecewise channel evolutions.

Certain exemplary embodiments may provide procedures discussed herein in which the gNB may configure four beams and switch off all except one of the beams during downlink transmission. The gNB may allocate and transmit all active, e.g., four CSI RSs from the configured beams to the single active beam, which allocation may be performed to sequential PRBs with a non-zero power CSI RS only at the resource element of one of the PRBs per frequency subband. The UE may report the strongest eigenvectors per frequency subband to the gNB, which combines the reported pieces of the channel transfer function evolution to one combined channel transfer function by optimum fitting of the piecewise borders.

Various exemplary embodiments may advantageously address the above-described considerations by advantageously providing the procedures described herein so that current Type II CSI and port selection codebook reporting may be designed to reconstruct the eigenvectors of the radio channel by reporting the combining coefficients for a set of $L$ selected beams. The Type II CSI reports may include wideband and subband parameters, and the calculation may include an eigenvalue decomposition per subband to identify the best eigenvectors. Thereby, the explicit CSI information may be lost despite the high overhead for reporting of beamwise wideband amplitude values as well as subband amplitude and phase values. Various exemplary embodiments may help to ensure that the processing performed by the UE does not destroy the explicit CSI information, which is then reported as the conventional Type II wideband amplitude as well as subband amplitude and phase values. The gNB can then reconstruct the full frequency selective explicit CSI, such as, for example, the complex channel transfer function for one intended channel component up to a certain level of distortion (at the frequency subband borders). Certain exemplary embodiments may avoid the destruction of the explicit CSI information by UE processing by properly configuring the transmit signals at the gNB so that they pass the expectation operation per frequency subband and the eigenvalue decomposition per subband with minimum information loss. Implementations of certain exemplary embodiments, such as positioning, channel prediction, or learning of BVDM characteristics, may benefit from the option to infer multipath component parameters with high accuracy.

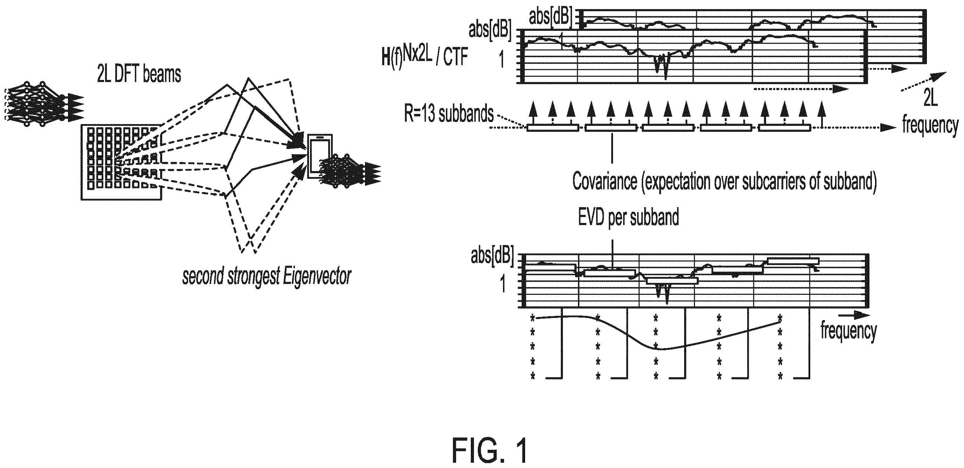

FIG. 1 illustrates Type II CSI processing in which, for example, a MIMO array forming four, e.g., DFT beams, according to various exemplary embodiments. The $L = 4$ beams may lead to $P = 2L$ ports due to two polarizations. Each layer *l* per polarization may be connected to one CTF. This may be considered the explicit CSI for which it is desired to learn for at least one of the *L* = 4 beams from the UE feedback on the PUCCH. The explicit CSI may lead to the channel matrix $H^{N \times 2L}$, where *N* is the number of subcarriers carrying non-zero power (NZP) CSI RSs $P_{CSI}$ for estimating the channel transfer function of one of the *l* layers. A receive signal $y^l$ may be defined as $y^l = H^l + n$, where *n* is an additive white Gaussian noise. For example, in a 10 MHz radio channel, *R* = 13 frequency subbands with four PRBs per subband. As a further example, assuming one CSI RS per PRB, four resource elements (RE) may be provided per CSI RS or AP for each frequency subband. This may result in $N = R \times 4 = 52$ CSI RS per channel transfer function, which can be used for the UE sided channel estimation.

The UE may estimate the CSI per layer by performing an expectation operation over each frequency subband, such as over the four resource elements carrying the CSI RS for one AP:

$$y_r^l = E\{y^l(4(r-1) + [1 \dots 4])\} \quad (1)$$

The expectation operation $E\{.\}$ may be used for the purpose of improving the signal to noise and interference ratio of the channel estimates while destroying the information about the frequency selective radio channel transfer function within each frequency subband. The expectation operation $E\{.\}$ may generate one flat radio channel over each frequency subband.

The UE may then calculate a covariance matrix $C_r$ per subband *r* over the 2*L* layers per subband:

$$C_r^{2L \times 2L} = y_r y_r^H \quad (2)$$

By an eigenvalue decomposition of the matrix $C_r$ the UE may calculate the strongest eigenvector $q_r$ per subband *r*:

$$C_r = Q_r D \, Q_r^{-1}$$

$$q_r = Q_r(:,1); \quad (3)$$

It may be assumed that the diagonal matrix *D* has the eigenvalues ordered by its strength so that the first eigenvector is the strongest eigenvector. The strongest eigenvector $q_r$ may then be reported back to the gNB by means of quantized non-zero coefficients, which are provided by certain known quantization and compression steps. Due to the quantization and compression steps, the gNB may receive an approximation of the best eigenbeam(s).

In case of a port selection codebook and a rank one transmission, the approximation of the strongest eigenbeam may be reported as a PMI value. The PMI value may select, for rank 1, the first vector of the precoding matrix *W,* where $w_{0,0}$ is the vector for the first polarization and $w_{1,0}$ for the second polarization. The first vector of the precoding matrix *W* may be considered to be approximately the eigenvector $q_r$ in Equation 3 above as follows:

$$W = \begin{bmatrix} w_{0,0} \\ w_{1,0} \end{bmatrix} \sim q_r \quad (4)$$

The vectors $w_{0,0}$ and $w_{1,0}$ may be calculated as follows:

$$w_{r,l} = \sum_{i=0}^{L-1} v_{i_{1,1}d+i} \cdot p_{r,l,i}^{(WB)} \cdot p_{r,l,i}^{(SB)} \cdot \varphi_{r,l,i} \quad (5)$$

The variable *r* defines the polarization, which is different than the frequency subband *r,* and the variable *l* defines the layer, where for rank 1, for example, layer *l* = 1. The vector $v_{i_{1,1}d+i}$ may be the port selection vector for identifying the related beam *i*. $p_{r,l,i}^{(WB)}$ may be the wideband beam amplitude for beam *i* on polarization *r* and layer *l*. $p_{r,l,i}^{(SB)}$ may be the subband beam amplitude for beam *i* on polarization *r* and layer *l*. $\varphi_{r,l,i}$ may be the phase coefficient for beam *i* on polarization *r* and layer *l*.

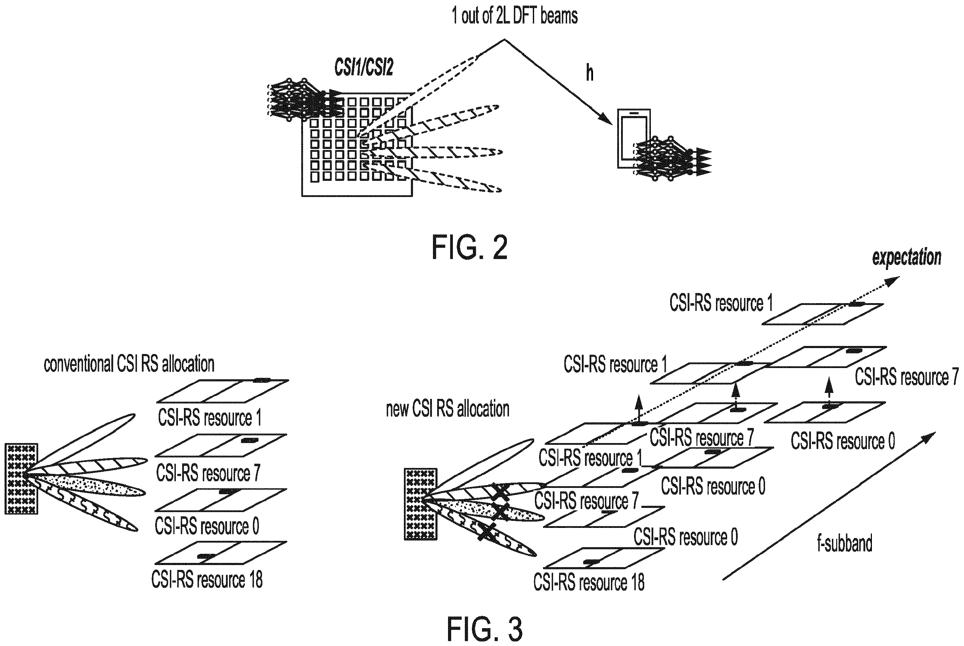

FIG. 2 illustrates transmitting four logical ports orthogonal CSI RSs over the same single beam, according to various exemplary embodiments. One initial step may be to modify the orthogonal port selection vectors $v_{i_{1,1}d+i}$, which are all zero with exception of the one element indicating the selected port. Conventionally, each selected port may have been related to one different beam and may have had one orthogonal CSI RS per beam for channel estimation. In certain exemplary embodiments, there may be, for example, four port selection vectors $\mathbf{v}_{i_{1,1}d+i}$, $i$ = 1 ...4, but the gNB allocates to all four port selection vectors the same single beam for which explicit CSI is desired. The gNB may then transmit, for the four logical ports, orthogonal CSI RSs, which may be transmitted over the same single beam so that the explicit beam can be estimated four times by four different CSI RSs.

FIG. 3 illustrates that the orthogonal CSI RSs may not be transmitted over the full frequency subband, according to certain exemplary embodiments. For example, orthogonal CSI RSs may be transmitted on one of the four PRBs including the frequency subband. As compared to Equation (1), the receive signal at subband $r$ and beam $i$ may have one non-zero CSI RSs as follows:

$$y_r^i = E\{y_l(4(r - 1) + [i])\}   \quad (6)$$

The expectation operation $E\{.\}$ may then estimate the CSI at the resource element from PRB $i$ of the subband $r$. Note that there is an impact to the estimation accuracy as there may be only one instead of four NZP CSI RSs per frequency subband, while the noise power is still added over all four CSI RS resource elements. To resolve this, one option may be to apply power boosting on the NZP CSI RS to regain the same signal-to-interference-and-noise-ratio (SINR) for channel estimation. As an example, the gNB may inform the UE about this adapted allocation of CSI RSs so that the UE does not perform the expectation operation to avoid a rise in noise power. By allocating $i$ = 1 to 4 different CSI RSs to the four different PRBs then the vector $y_r$ may contain the complex channel transfer function over the four CSI RS resource elements for each subband $r$.

The gNB may then calculate the covariance matrix $C_r$, which is shown for a complex receive vector $y_r$ of length three and limited to the first vector of the covariance matrix for exemplary purposes only. The embodiment discussed herein are not limited to this example of calculating the covariance matrix $C_r$. In certain exemplary embodiments, the covariance matrix $C_r$ is calculated as follows:

$$C_r = cov\left(\begin{bmatrix} y_1 \\ y_2 \\ y_3 \end{bmatrix}\right) = y_r y_r^H = \begin{matrix} y_1 * y_1^* \\ y_2 * y_1^* \\ y_3 * y_1^* \end{matrix} \ldots = \begin{matrix} \alpha_1\alpha_1\, e^{j\varphi_1}e^{-j\varphi_1} \\ \alpha_2\alpha_1\, e^{j\varphi_1}e^{-j\varphi_2} \\ \alpha_3\alpha_1\, e^{j\varphi_1}e^{-j\varphi_3} \end{matrix} \ldots = \begin{matrix} \alpha_1\alpha_1\, e^{j\varphi_1-\varphi_1} \\ \alpha_2\alpha_1\, e^{j\varphi_1-\varphi_2} \\ \alpha_3\alpha_1\, e^{j\varphi_1-\varphi_3} \end{matrix} \ldots \quad (7)$$

The first column vector of the covariance matrix $C_r$ may contain the amplitude values $\alpha_1$ to $\alpha_3$ relative to the amplitude of the first element $\alpha_1$ and similarly the phases $\varphi_1$ to $\varphi_3$ relative to the phase $\varphi_1$. The receive vector $y_r$ may contain estimates of the complex channel transfer function for each subband $r$ such that the covariance matrix provides the explicit CSI normalized to the first element of the covariance matrix with amplitude $\alpha_1$ and phase $\varphi_1$. The amplitude of $\alpha_1$ may be the square root of the first element of $C_r$, i.e., $\alpha_1 = \sqrt{C_r(1,1)}$.

Next, the eigenvalue decomposition of $C_r$ may be performed and the strongest eigenvector may be reported. The matrix $Q_r$ may be unitary, which results in the strongest eigenvector $q_r$ having a length of one so that a further known normalization process may be optionally performed. The strongest eigenvector $q_r$ as being reported in a quantized and compressed form back to the gNB may maintain the relative amplitude and phase variations for each frequency subband $r$. This may be the explicit CSI information per subband. The explicit CSI information may be contained in the reported PMI $w_{r,l}$ from Equation (5), where the port selection vectors $\mathbf{v}_{i_{1,1}d+i}$ may be related to the frequency subcarriers having one active CSI RS each:

$$w_{r,l} = \sum_{i=0}^{L-1} \mathbf{v}_{i_{1,1}d+i} \cdot p_{r,l,i}^{(WB)} \cdot p_{r,l,i}^{(SB)} \cdot \varphi_{r,l,i} \qquad (8)$$

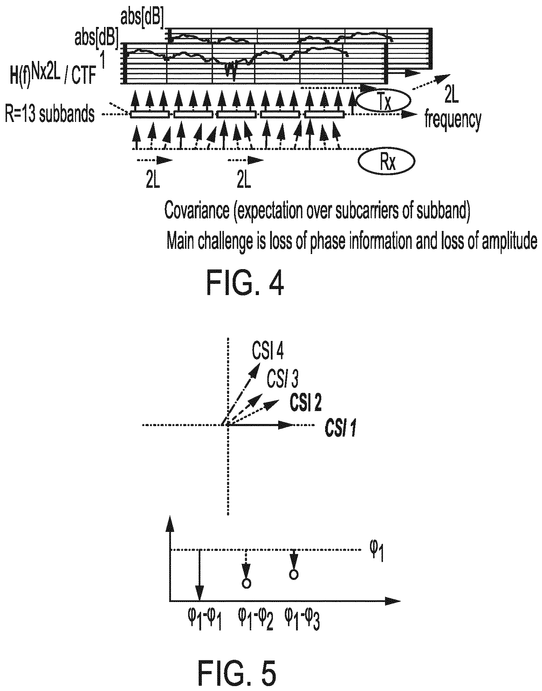

FIG. 4 illustrates certain exemplary embodiments in which normalized explicit CSI is then received by the gNB for some or all frequency subbands. For example, normalized explicit CSI may be received by the gNB for some or all frequency subbands $r$ = 1 to R, which may result in a piecewise explicit CSI. The piecewise explicit CSI may mean that the explicit CSI per frequency subband may be relative to the normalized first PRB of this frequency subband ($\alpha_1$, $\varphi_1$). FIG. 5 illustrates the relative explicit CSI for one single frequency subband $r$ according to some exemplary embodiments.

The gNB may then recombine the pieces of the frequency subbands to one single and continuous channel transfer function to overcome the parameter jumps at the borders of adjacent subbands. This can be achieved by extrapolation of the pieces from the borders of two adjacent pieces to find the most likely evolution of the channel transfer function. For example, this may be formed by calculating the mean slopes averaged over the slopes at the borders of the right and the left frequency subband. According to some exemplary embodiments, an artificial intelligence/machine learning neural network may be implemented to infer or determine a most likely overall channel transfer function including the estimated piecewise amplitude and phase evolution.

According to certain other exemplary embodiments, new extra PUCCH information compared to Type II CSI may be reported by the UE to the gNB. The extra PUCCH information may then be the relative phase and amplitude values for all the frequency subbands $r$ and $r + 1$. In that case, the gNB may not infer the evolution of the explicit CSI over frequency borders, and instead may directly use the reported relative amplitude and phase values. The benefit of this procedure may be higher performance, but at the cost of extra reporting overhead as well as the related standardization effort. This overhead may be moderate with, for example, three times $R$ - 1 bits, i.e., 36 bits.

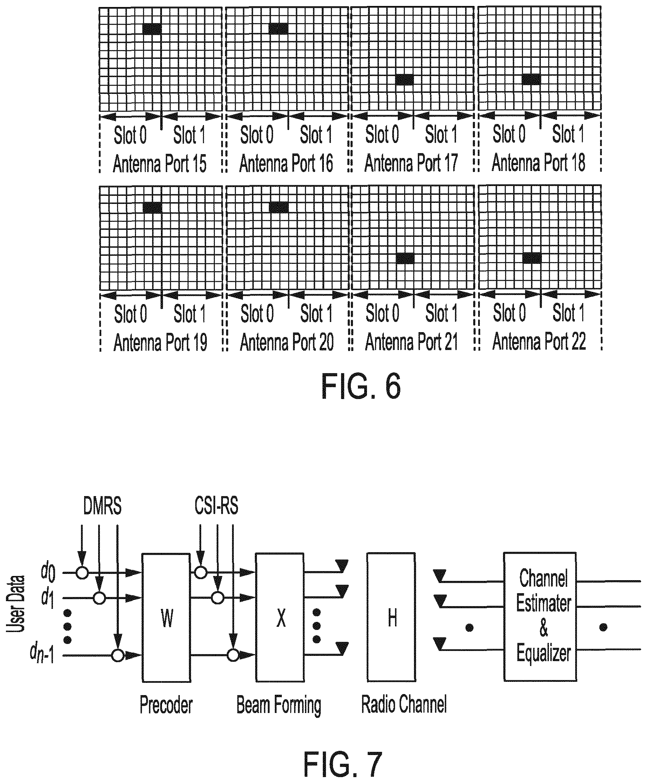

FIG. 6 illustrates an exemplary allocation of resource elements to different antenna ports. For example, an allocation of NZP CSI RS in which, from four PRBs, one NZP CSI RS may be transmitted per port.

FIG. 7 illustrates exemplary port selection beam transmission where the CSI RSs may be affected by the beamformer X in the same manner as following data transmissions, according to certain further exemplary embodiments. The CSI RS may be inserted before a wideband beamformer.

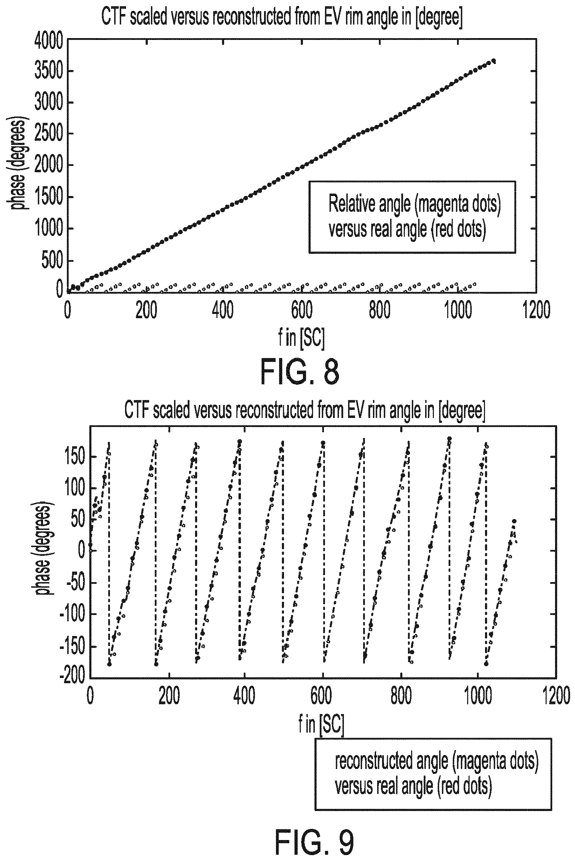

To assess and illustrate the functionality and performance of various exemplary embodiments described herein, FIGs. 8-11 illustrate various simulation results. FIG. 8 illustrates an unwrapped explicit CSI and piecewise angle as reconstructed from the CSI reports according to various exemplary embodiments. For each frequency subband, the first phase value may be reset to $\varphi$ to zero.

FIG. 9 illustrates estimation versus the ideal known angle evolution according to certain exemplary embodiments. The extrapolation of angles over the frequency subband borders may be averaged to obtain the estimated angle evolution over the full bandwidth of the channel transfer function. The estimation may be considered accurate even though there are some fluctuating errors at frequency subband borders. In addition, certain phase offsets may occur due to the first frequency subband, where an extrapolation may not be possible.

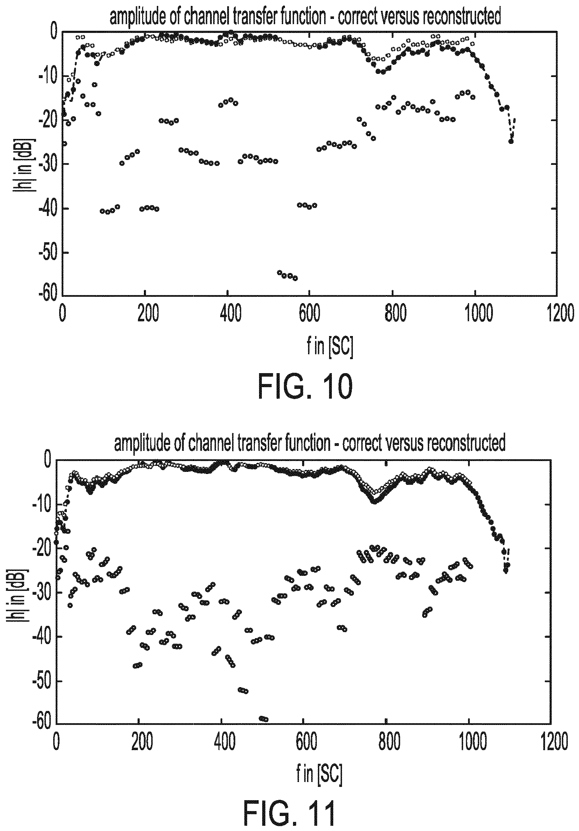

FIG. 10 illustrates exemplary embodiments in which one NZP CSI RS may be transmitted per PRB. For example, four per frequency subband. FIG. 11 illustrates exemplary embodiments in which two NZP CSI RSs are transmitted per PRB, which is eight per frequency subband. In both FIGs. 10 and 11, an improved reconstruction quality may be observed, while the higher density of eight NZP CSI RSs per frequency subband leads to a higher reconstruction accuracy. The reconstruction error (black curve) may in FIG. 11 be below -20dB.

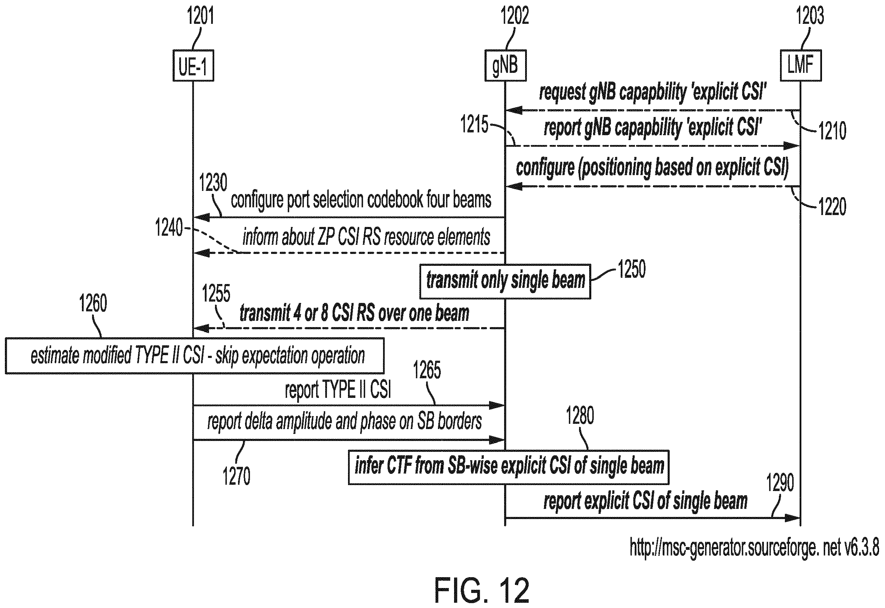

FIG. 12 illustrates a message/signal flow between a UE 1201, a gNB 1202, and a location management function (LMF) 1203, according to various exemplary embodiments. At 1210, the LMF 1203 may provide a request to the gNB 1202 to request gNB capability for explicit CSI, and as 1215, the gNB 1202 reports the gNB capability for explicit CSI to the LMF 1203. At 1220, the LMF 1203 provides, to the gNB 1202, a configure message to configure messaging based on explicit CSI. As 1230, the gNB 1202 provides a message to the UE 1201 to configure port selection codebook for four beams, and at 1240, the gNB 1202 informs the UE 1202 about NZP CSI RS resource elements.

At 1250, the gNB 1202 prepares to transmit a single beam, and at 1255, transmits 4 or 8 CSI RS over the single beam to the UE 1201. At 1260, the UE 1201 estimates modified Type II CSI based on the received CSI RS, and at 1265, the UE 1201 ports the Type II CSI to the gNB 1202. At 1270, the UE 1201 reports delta amplitude and phase information on subband borders. At 1280, the gNB 1202 determines and/or infers CTF information from the subband-wise explicit CSI of the single beam. At 1290, the gNB 1202 reports the explicit CSI of the single beam to the LMF 1203.

UE processing may vary depending on the implantation. For example., in an exemplary embodiment, the gNB may check or determine the UE capability, i.e., if the UE is aware of explicit CSI reporting and if the UE supports the processing, so that the gNB can infer the explicit CSI properly from the UE feedback. As another exemplary embodiment, the gNB may perform a test phase, before using the explicit CSI mode. In the test phase, the gNB may send precoded physical downlink shared channel (PDSCH) data, where the precoder may be sensitive to CSI estimation errors. This may be achieved, for example, by a ZF precoder - ideally over two or more cells - at a relatively high SINR with a high modulation and coding scheme. By applying the explicit CSI estimation for the gNB-UE link, the gNB may derive the above-mentioned ZF precoder and check or determine the quality of the precoded gNB - UE link, e.g., based on hybrid automatic repeat request (HARQ) feedback. In case the UE processing degrades the estimation of the explicit CSI then the number of NACK reports may be above the expected target value, such as 10%.

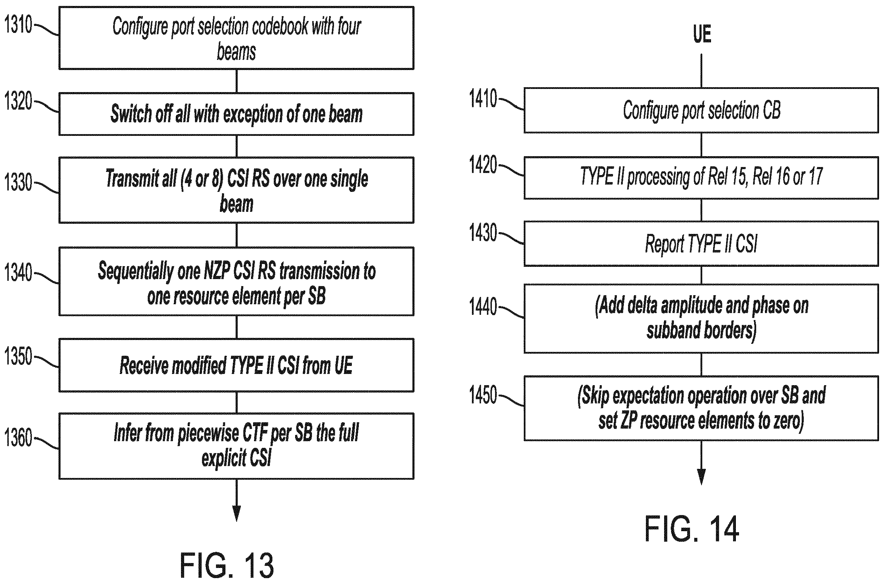

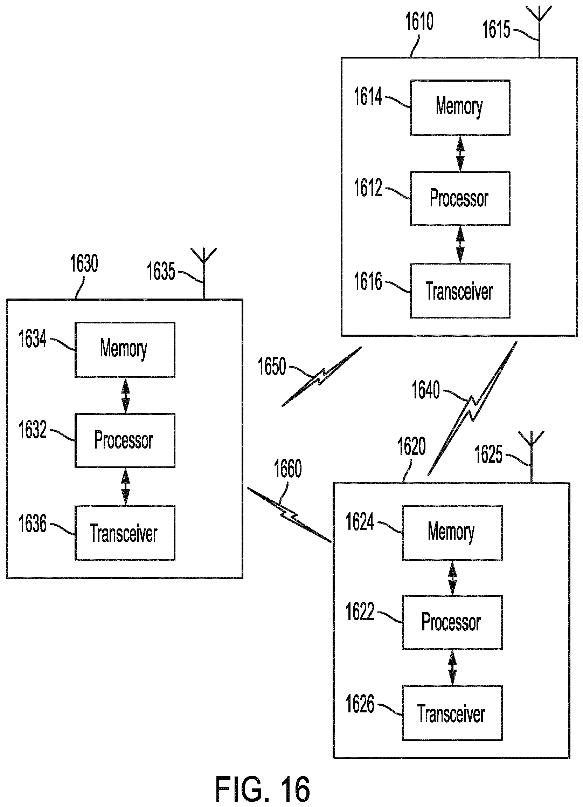

FIG. 13 illustrates an example flow diagram of a method, according to various exemplary embodiments. In an exemplary embodiment, the method of FIG. 13 may be performed by a network element, or a group of multiple network elements in a 3GPP system, such as LTE or 5G-NR. For instance, in an exemplary embodiment, the method of FIG. 13 may be performed by a network entity, such as a gNB similar to apparatus 1610 illustrated in FIG. 16.

According to various exemplary embodiments, the method of FIG. 13 may include, at 1310, configuring a port selection codebook with four beams. At 1320, the method may include switching off all beams except for one beam, and at 1330, transmitting all 4 or 8 CSI RS over a single beam. At 1340, the method performs sequentially transmitting one NZP CSI RE to one resource element per subband. At 1350, the gNB (apparatus 1610) receives modified Type II CSI from a UE similar to apparatus 1620 illustrated in FIG. 16. As 1360, the method includes inferring, from piecewise CTF per subband, the full explicit CSI.

FIG. 14 illustrates an example flow diagram of a method, according to various exemplary embodiments. In an exemplary embodiment, the method of FIG. 14 may be performed by a network element, or a group of multiple network elements in a 3GPP system, such as LTE or 5G-NR. For instance, in an exemplary embodiment, the method of FIG. 5 may be performed by a network device, such as a UE, similar to apparatus 1620 illustrated in FIG. 16.

According to various exemplary embodiments, the method of FIG. 14 may include, at 1410, configuring a port selection codebook, and at 1420, performing Type II CSI processing to determine Type II CSI for the gNB (apparatus 1610). At 1430, the method includes reporting the Type II CSI for the gNB (apparatus 1610). At 1440, the method includes adding delta amplitude and phase on subband borders and reporting the delta amplitude and phase on subband borders to the gNB (apparatus 1610). At 1450, the method includes setting NZP resource elements to zero.

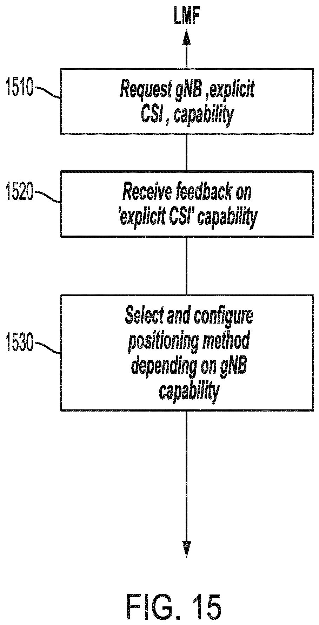

FIG. 15 illustrates an example flow diagram of a method, according to various exemplary embodiments. In an exemplary embodiment, the method of FIG. 15 may be performed by a network element, or a group of multiple network elements in a 3GPP system, such as LTE or 5G-NR. For instance, in an exemplary embodiment, the method of FIG. 15 may be performed by a network entity, such as an LMF, similar to apparatus 1630 illustrated in FIG. 16.

According to various exemplary embodiments, the method of FIG. 15 may include, at 1510, requesting from the gNB (apparatus 1610) explicit CSI capability. At 1520, the method includes receiving information and/or feedback from the gNB (apparatus 1610) on the explicit CSI capability of the gNB (apparatus 1610). At 1530, the method selects and configures a positioning procedure based on the explicit CSI capability of the gNB (apparatus 1610).

FIG. 16 illustrates apparatuses 1610, 1620, and 1630 according to various exemplary embodiments. In the various exemplary embodiments, apparatus 1610 may be a network entity, element of the core network, or element in a communications network or associated with such a network, such as a base station, an NE, or a gNB. For example, gNB 1202 may be an example of apparatus 1610 according to various exemplary embodiments as discussed above. It should be noted that one of ordinary skill in the art would understand that apparatus 1610 may include components or features not shown in FIG. 16. Further, apparatus 1620 may be an element in a communications network or associated with such a network, such as a UE, RedCap UE, SL UE, mobile equipment (ME), mobile station, mobile device, stationary device, IoT device, or other device. For example, UE 1201 may be an example of apparatus 1620 according to various exemplary embodiments as discussed above. It should be noted that one of ordinary skill in the art would understand that apparatus 1620 may include components or features not shown in FIG. 16. In addition, apparatus 1630 may be a part of the RAN, a network entity or a subcomponent or processing functions of a network entity of computation device connected to the network, such as a location management function (LMF). LMF 1203 may be an example of apparatus 1630 according to various exemplary embodiments as discussed above. It should be noted that one of ordinary skill in the art would understand that apparatus 1630 may include components or features not shown in FIG. 16.

According to various exemplary embodiments, the apparatuses 1610, 1620, and/or 1630 may include one or more processors, one or more computer-readable storage medium (for example, memory, storage, or the like), one or more radio access components (for example, a modem, a transceiver, or the like), and/or a user interface. In some exemplary embodiments, apparatuses 1610, 1620, and/or 1630 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 16, apparatuses 1610, 1620, and/or 1630 may include or be coupled to processors 1612, 1622, and 1632, respectively, for processing information and executing instructions or operations. Processors 1612, 1622, and 1632 may be any type of general or specific purpose processor. In fact, processors 1612, 1622, and 1632 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 1612 (1622 and 1632) for each of apparatuses 1610, 1620, and/or 1630 is shown in FIG. 16, multiple processors may be utilized according to other example embodiments. For example, it should be understood that, in certain example embodiments, apparatuses 1610, 1620, and/or 1630 may include two or more processors that may form a multiprocessor system (for example, in this case processors 1612, 1622, and 1632 may represent a multiprocessor) that may support multiprocessing. According to certain example embodiments, the multiprocessor system may be tightly coupled or loosely coupled to, for example, form a computer cluster).

Processors 1612, 1622, and 1632 may perform functions associated with the operation of apparatuses 1610, 1620, and/or 1630, respectively, including, as some examples, precoding of antenna gain/phase parameters, encoding and decoding of individual bits forming a communication message, formatting of information, and overall control of the apparatuses 1610, 1620, and/or 1630, including processes illustrated in FIGs. 13-15.

Apparatuses 1610, 1620, and/or 1630 may further include or be coupled to memory 1614, 1624, and/or 1634 (internal or external), respectively, which may be coupled to processors 1612, 1622, and 1632, respectively, for storing information and instructions that may be executed by processors 1612, 1622, and 1632. Memory 1614 (memory 1624 and 1634) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 1614 (memory 1624 and 1634) can be comprised of any combination of random access memory (RAM), read only memory (ROM), static storage such as a magnetic or optical disk, hard disk drive (HDD), or any other type of non-transitory machine or computer readable media. The instructions stored in memory 1614, memory 1624, and memory 1634 may include program instructions or computer program code that, when executed by processors 1612, 1622, and 1632, enable the apparatuses 1610, 1620, and/or 1630 to perform tasks as described herein.

In certain example embodiments, apparatuses 1610, 1620, and/or 1630 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 1612, 1622, and 1632 and/or apparatuses 1610, 1620, and/or 1630 to perform any of the methods illustrated in FIGs. 13-15.

In some exemplary embodiments, apparatuses 1610, 1620, and/or 1630 may also include or be coupled to one or more antennas 1615, 1625, and 1635, respectively, for receiving a downlink signal and for transmitting via an uplink from apparatuses 1610, 1620, and/or 1630. Apparatuses 1610, 1620, and/or 1630 may further include transceivers 1616, 1626, and 1636, respectively, configured to transmit and receive information. The transceivers 1616, 1626, and 1636 may also include a radio interface (for example, a modem) respectively coupled to the antennas 1615, 1625, and 1635. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 1616, 1626, and 1636 may be respectively configured to modulate information on to a carrier waveform for transmission by the antenna(s) 1615, 1625, and 1635, and demodulate information received via the antenna(s) 1615, 1625, and 1635 for further processing by other elements of apparatuses 1610, 1620, and/or 1630. In other example embodiments, transceivers 1616, 1626, and 1636 may be capable of transmitting and receiving signals or data directly. Additionally or alternatively, in some example embodiments, apparatuses 1610, 1620, and/or 1630 may include an input and/or output device (I/O device). In certain example embodiments, apparatuses 1610, 1620, and/or 1630 may further include a user interface, such as a graphical user interface or touchscreen.

In certain example embodiments, memory 1614, memory 1624, and memory 1634 store software modules that provide functionality when executed by processors 1612, 1622, and 1632, respectively. The modules may include, for example, an operating system that provides operating system functionality for apparatuses 1610, 1620, and/or 1630. The memory may also store one or more functional modules, such as an application or program, to provide additional functionality for apparatuses 1610, 1620, and/or 1630. The components of apparatuses 1610, 1620, and/or 1630 may be implemented in hardware, or as any suitable combination of hardware and software. According to certain example embodiments, apparatus 1610 may optionally be configured to communicate with apparatus 1620 and/or 1630 via a wireless or wired communications links 1640, 1650, and/or 1660 according to any radio access technology, such as NR.

According to certain example embodiments, processors 1612, 1622, and 1632, and memory 1614, 1624, and 1634 may be included in or may form a part of processing circuitry or control circuitry. In addition, in some example embodiments, transceivers 1616, 1626, and 1636 may be included in or may form a part of transceiving circuitry.

For instance, in certain exemplary embodiments, the apparatus 1610 may be controlled by the memory 1614 and the processor 1612 to provide, to a user equipment similar to apparatus 1620, a plurality of channel state information reference signals over a single beam, and receive channel state information from the user equipment. The apparatus 1610 may also determine explicit channel state information from a channel transfer function for some or all frequency subbands based on the received channel state information.

In various exemplary embodiments, the apparatus 1620 may be controlled by the memory 1624 and the processor 1622 to receive, from a network device, a plurality of channel state information reference signals over a single beam and report channel state information to a network device similar to apparatus 1610. The apparatus 1620 may also determine and report, to the network device, amplitude and phase on subband borders, which is reported separately from the channel state information.

In various exemplary embodiments, the apparatus 1630 may be controlled by the memory 1634 and the processor 1632 to provide, to a network device similar to apparatus 1610, a request for information on a capability of the network device related to explicit channel state information. The apparatus 1630 may also select a procedure according to feedback from the network device in response to the request and configure the network entity for the selected procedure.

In some exemplary embodiments, an apparatus (e.g., apparatus 1610, apparatus 1620, and/or apparatus 1630) may include means for performing a method, a process, or any of the variants discussed herein. Examples of the means may include one or more processors, memory, controllers, transmitters, receivers, and/or computer program code for causing the performance of the operations.

Various exemplary embodiments may be directed to an apparatus, such as apparatus 1610, apparatus 1620, and/or apparatus 1630, that includes means for performing any of the methods described herein.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 1610, 1620, and/or 1630) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 1610, 1620, and/or 1630), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

Partial Glossary:

| | |
|---|---|
| 3GPP | 3rd Generation Partnership Project |
| 5G | 5th Generation |

| | |
|---|---|
| 5GCN | 5G Core Network |
| AP | Antenna Ports |
| CB | Codebook |
| CSI | Channel State Information |
| CSI-RS | CSI Reference Signals |
| CTF | Channel Transfer Function |
| DL | Downlink |
| EMBB | Enhanced Mobile Broadband |
| FDD | Frequency Division Duplex |
| gNB | 5G or Next Generation NodeB |
| LMF | Location Management Function |
| LTE | Long Term Evolution |
| MIMO | Multiple Input Multiple Output |
| MPC | Multi-Path Component |
| NR | New Radio |
| NZP | Non-Zero Power |
| OTA | Over The Air |
| PMI | Precoding Matrix Indicator |
| PRB | Physical Resource Block |
| RAN | Radio Access Network |
| RS | Reference Signal |
| SB | Subband |
| UE | User Equipment |
| UL | Uplink |
| URLLC | Ultra Reliable Low Latency Communication |

**Claims**

1. A method performed at a network device (1202), the method comprising:

   providing, to a user equipment (1201), a plurality of channel state information reference signals over a single beam for a plurality of frequency subbands, wherein a frequency subband comprises a plurality of physical resource blocks, each physical resource block comprising a plurality of resource elements;
   receiving channel state information from the user equipment (1201); and
   determining explicit channel state information from a channel transfer function for some or all frequency subbands based on the received channel state information.

2. The method according to claim 1, further comprising:

   configuring a port selection codebook for a plurality of beams, which comprises the single beam; and
   maintaining the single beam as active and switching off all other beams of the plurality of beams.

3. The method according to claim 1 or claim 2, further comprising:
   sequentially providing one non-zero power channel state information reference signal transmission to one resource element per subband.

4. The method according to any one of claims 1-3, wherein the explicit channel state information is determined from the channel transfer function by estimating and combining the channel transfer function per frequency subband.

5. A method performed at a user equipment (1201), the method comprising:

   receiving, from a network device (1202), a plurality of channel state information reference signals over a single beam;
   reporting channel state information to the network device (1202); and
   determining and reporting, to the network device (1202), amplitude and phase on subband borders, which is reported separately from the channel state information.

**6.** The method according to claim 5, further comprising:
determining the channel state information using Type II processing.

**7.** The method according to claim 5 or claim 6, further comprising:
setting non-zero power resource elements to zero.

**8.** A method performed at a network entity (1203), the method comprising:

providing, to a network device (1202), a request for information on a capability of the network device (1202) related to explicit channel state information; and
selecting a procedure according to feedback from the network device (1202) in response to the request and configuring the network entity (1203) for the selected procedure.

**9.** The method according to claim 8, further comprising:
receiving a report, as the feedback, from the network device (1202) comprising information indicating the capability for explicit channel state information.

**10.** The method according to claim 8 or claim 9, further comprising:
receiving, from the network device (1202), explicit channel state information of a single beam.

**11.** An apparatus (1610), comprising:

at least one processor (1612); and
at least one memory (1614) storing instructions that, when executed by the at least one processor (1612), cause the apparatus (1610) at least to:

provide, to a user equipment (1620), a plurality of channel state information reference signals over a single beam;
receive channel state information from the user equipment (1620); and
determine explicit channel state information from a channel transfer function for some or all frequency subbands based on the received channel state information.

**12.** The apparatus (1610) according to claim 11, wherein the apparatus (1610) is further caused to:

configure a port selection codebook for a plurality of beams, which comprises the single beam; and
maintain the single beam as active and switching off all other beams of the plurality of beams.

**13.** The apparatus (1610) according to claim 11 or claim 12, wherein the apparatus (1610) is further caused to:
sequentially provide one non-zero power channel state information reference signal transmission to one resource element per subband.

**14.** The apparatus (1610) according to any one of claims 11-13, wherein the explicit channel state information is determined from the channel transfer function by estimating and combining the channel transfer function per frequency subband.

**15.** An apparatus (1620), comprising:

at least one processor (1622); and
at least one memory (1624) storing instructions that, when executed by the at least one processor (1622), cause the apparatus (1620) at least to:

receive, from a network device (1610), a plurality of channel state information reference signals over a single beam;
report channel state information to the network device (1610); and
determine and report, to the network device (1610), amplitude and phase on subband borders, which is reported separately from the channel state information.

**16.** The apparatus (1620) according to claim 15, wherein the apparatus (1620) is further caused to:

determine the channel state information using Type II processing.

17. The apparatus (1620) according to claim 15 or claim 16, wherein the apparatus (1620) is further caused to:
set non-zero power resource elements to zero.

18. An apparatus (1630), comprising:

at least one processor (1632); and
at least one memory (1634) storing instructions that, when executed by the at least one processor (1632), cause the apparatus (1630) at least to:

provide, to a network device (1610), a request for information on a capability of the network device (1610) related to explicit channel state information; and
select a procedure according to feedback from the network device (1610) in response to the request and configure the apparatus (1630) for the selected procedure.

19. The apparatus (1630) according to claim 18, wherein the apparatus (1630) is further caused to:
receive a report, as the feedback, from the network device (1610) comprising information indicating the capability for explicit channel state information.

20. The apparatus (1630) according to claim 18 or claim 19, wherein the apparatus (1630) is further caused to:
receive, from the network device (1610), explicit channel state information of a single beam.

FIG. 1

1 out of 2L DFT beams

**CSI1/CSI2**

h

## FIG. 2

expectation

conventional CSI RS allocation

CSI-RS resource 1

CSI-RS resource 7

CSI-RS resource 0

CSI-RS resource 18

new CSI RS allocation

CSI-RS resource 1

CSI-RS resource 1

CSI-RS resource 7

CSI-RS resource 7

CSI-RS resource 0

CSI-RS resource 7

CSI-RS resource 0

CSI-RS resource 0

CSI-RS resource 18

f-subband

## FIG. 3

EP 4 412 103 A2

FIG. 4

FIG. 5

| Slot 0 | Slot 1 | Slot 0 | Slot 1 | Slot 0 | Slot 1 | Slot 0 | Slot 1 |

Antenna Port 15 :: Antenna Port 16 :: Antenna Port 17 :: Antenna Port 18

| Slot 0 | Slot 1 | Slot 0 | Slot 1 | Slot 0 | Slot 1 | Slot 0 | Slot 1 |

Antenna Port 19 :: Antenna Port 20 :: Antenna Port 21 :: Antenna Port 22

## FIG. 6

DMRS          CSI-RS

User Data

$d_0$

$d_1$

$d_{n-1}$

W

Precoder

X

Beam Forming

H

Radio Channel

Channel
Estimater
&
Equalizer

## FIG. 7

CTF scaled versus reconstructed from EV rim angle in [degree]

Relative angle (magenta dots)
versus real angle (red dots)

f in [SC]

FIG. 8

CTF scaled versus reconstructed from EV rim angle in [degree]

f in [SC]

reconstructed angle (magenta dots)
versus real angle (red dots)

FIG. 9

amplitude of channel transfer function - correct versus reconstructed

FIG. 10

amplitude of channel transfer function - correct versus reconstructed

FIG. 11

FIG. 12

http://msc-generator.sourceforge. net v6.3.8

EP 4 412 103 A2

```
┌──────┐   ┌─────────────────────────────────────┐
│ 1310 ├───┤ Configure port selection codebook   │
└──────┘   │ with four beams                     │
           └─────────────────────────────────────┘
                            │
┌──────┐   ┌─────────────────────────────────────┐
│ 1320 ├───┤ Switch off all with exception of    │
└──────┘   │ one beam                            │
           └─────────────────────────────────────┘
                            │
┌──────┐   ┌─────────────────────────────────────┐
│ 1330 ├───┤ Transmit all (4 or 8) CSI RS over   │
└──────┘   │ one single beam                     │
           └─────────────────────────────────────┘
                            │
┌──────┐   ┌─────────────────────────────────────┐
│ 1340 ├───┤ Sequentially one NZP CSI RS         │
└──────┘   │ transmission to one resource        │
           │ element per SB                      │
           └─────────────────────────────────────┘
                            │
┌──────┐   ┌─────────────────────────────────────┐
│ 1350 ├───┤ Receive modified TYPE II CSI from UE│
└──────┘   └─────────────────────────────────────┘
                            │
┌──────┐   ┌─────────────────────────────────────┐
│ 1360 ├───┤ Infer from piecewise CTF per SB the │
└──────┘   │ full explicit CSI                   │
           └─────────────────────────────────────┘
```

FIG. 13

```
                        UE
                         │
┌──────┐   ┌─────────────────────────────────────┐
│ 1410 ├───┤ Configure port selection CB         │
└──────┘   └─────────────────────────────────────┘
                         │
┌──────┐   ┌─────────────────────────────────────┐
│ 1420 ├───┤ TYPE II processing of Rel 15, Rel   │
└──────┘   │ 16 or 17                            │
           └─────────────────────────────────────┘
                         │
┌──────┐   ┌─────────────────────────────────────┐
│ 1430 ├───┤ Report TYPE II CSI                  │
└──────┘   └─────────────────────────────────────┘
                         │
┌──────┐   ┌─────────────────────────────────────┐
│ 1440 ├───┤ (Add delta amplitude and phase on   │
└──────┘   │ subband borders)                    │
           └─────────────────────────────────────┘
                         │
┌──────┐   ┌─────────────────────────────────────┐
│ 1450 ├───┤ (Skip expectation operation over SB │
└──────┘   │ and set ZP resource elements to     │
           │ zero)                               │
           └─────────────────────────────────────┘
```

FIG. 14

LMF

1510 — Request gNB ,explicit CSI , capability

1520 — Receive feedback on 'explicit CSI' capability

1530 — Select and configure positioning method depending on gNB capability

FIG. 15

FIG. 16